# EUROPEAN PATENT SPECIFICATION

(11) **EP 1 198 181 B1**
(45) Date of publication and mention of the grant of the patent: **23.04.2003**
(21) Application number: 00950069.5
(22) Date of filing: 24.07.2000
(51) Int. Cl.: A23L 1/236

(54) **SWEETENER**
SÜSSSTOFF
ADOUCISSANT

(30) Priority: 26.07.1999 NL 1012701
(43) Date of publication of application: 24.04.2002
(73) Proprietor: Sara Lee/DE, 3532 AA Utrecht (NL)
(72) Inventor: RENKENS, Annemarie, Johanna, Maria, NL-3448 DZ Woerden (NL)
(74) Representative: Prins, Adrianus Willem
(86) International application number: NL0000521
(87) International publication number: WO01006872

(56) References cited:
- EP-A- 0 434 321
- WO-A-98/27832
- WO-A-99/30573
- HIGGINBOTHAM: "Talin protein (thaumatin)" 1986 , DEKKER - ALTERNATIVE SWEETENERS , NEW YORK, US XP002133915 page 118, paragraph 2

## Description

This invention relates to a sweetener composition based on a mixture of sweeteners. The present composition has an improved taste, in particular as regards the resemblance to sugar.

By now, the use of artificial sweeteners has been widely adopted by the consumer. They have a healthy image because they are low-calorie and in many cases fit into a diet for diabetics or for people suffering from overweight. In addition, the risk of caries with artificial sweeteners is considerably smaller than with sugar.

It is known that artificial sweeteners, for improving the taste, are often used in combinations of two or more of them, the aim being especially to obtain a taste resembling that of sugar as closely as possible, without involving unpleasant flavor notes.

Known products are based, for instance, on combinations of saccharin and sodium cyclamate. Although such combinations already provide a good taste, there remains a need for sweeteners having a taste still closer to that of sugar.

One object of the invention is therefore to provide a sweetener combination having an improved taste, more particularly a softer taste, so that the sweetener when used in, for instance, tea or coffee, resembles sugar more. A further object of the invention is for the sweetener combination contemplated to have a good processability in food technology, so that a formulation or formulation form attractive for the consumer can be prepared.

These and other objects are achieved by a combination of aspartame, acesulfame-K and thaumatin, comprising:
5 - 35 parts by weight of aspartame,
3 - 20 parts by weight of acesulfame-K, and
0.001- 0.3 parts by weight of thaumatin.

Surprisingly, it has been found, according to the invention, that very small amounts of thaumatin are adequate to mask the flavor note of aspartame and acesulfame-K, which is often experienced as somewhat bitter. In addition, it has been found that the unique combination of aspartame, acesulfame-K and thaumatin leads to a particularly good sweetener whose taste, in particular when used in coffee or tea, exhibits very great similarities to the taste of sugar.

It is further surprising that the above-mentioned advantageous properties of the present composition can be achieved when thaumatin is used in an amount which is below the sweetness threshold of the substance. Thaumatin is known per se for use as sweetener, in which connection reference can be made to the chapter 'Talin protein (thaumatin)' by J.D. Higginbotham in the book 'Alternative sweeteners', Dekker, New York, 1986. In this chapter it is mentioned that thaumatin as a sweetener can act synergistically with (that is to say, can enhance the sweetening action of) other sweetener, but it is additionally mentioned that this effect does not occur in aspartame.

In a composition according to the invention, the weight ratio between aspartame and acesulfame-K is preferably between 1 and 5. In this proportion, a particularly favorable taste and sweetness are achieved. The relative ratio is partly determined by the formulation contemplated and the use of the composition.

The sweetener composition according to the invention can be a sweetener tablet, a liquid sweetener (aqueous solution), or a sweetener in crystalline form. A tablet preferably has a weight of 40 - 80 mg.

Surprisingly, it has been found that such compositions give a clear improvement of the taste, the texture and the mouthfeel.

The essence of the invention resides in the combination of three sweeteners, with thaumatin being present in an amount which is below the taste threshold but which does contribute to a softening and rounding of the taste. This taste improvement is strongly manifest in particular in coffee.

It is noted that thaumatin is a natural protein (E 957). Thaumatin can be used as such, but a suitable form of use is a mixture of 10% by weight of thaumatin and 90% by weight of maltodextrin. It is also possible to use thaumatin in a combination with gum arabic in a weight ratio of 1:9.

Aspartame is also known as the 1-methyl ester ofN-L-α-aspartyl-L-phenylalanine, while acesulfame-K is also referred to as the potassium salt of6-methyl-1,2,3-oxathiazin-4(3H)-on-2,2-dioxide.

Preferably, the tablet according to the invention also contains a filler. As filler, food-approved fillers are used, more particularly lactose, isomers and derivatives thereof, inulin, isomalt and/or oligofructose. Preferred is lactose or Tablettose™. The latter is a directly compressible milk sugar, especially suitable for tabletting.

Further, it is preferred to use a lubricant to facilitate tabletting. Suitable lubricants are all substances that effect the desired lubrication without the taste of the tablet being adversely affected. Examples include leucine, silicon dioxide and magnesium silicate. Preferably, leucine is used.

To achieve disintegration of the tablet when added to, for instance, coffee or tea, preferably a disintegrator is included in the composition. Examples of suitable disintegrators are sodium carbonate, sodium bicarbonate, citrates, magnesium and aluminum silicates, cellulose-based materials, such as cellulose itself, microcrystalline cellulose, cellulose-containing natural products (bran) and derivatives thereof, substituted celluloses (hydroxypropyl cellulose, methyl cellulose, carboxymethyl cellulose), and starch and derivatives, such as pregelatinized starch. The use of carboxymethyl cellulose is preferred.

A preference is expressed for the following composition in percent by weight:

| | |
|---|---|
| Aspartame | 10-30 |
| Acesulfame-K | 5-12 |
| Thaumatin | 0.1-0.001 |
| Leucine | 3-10 |
| Carboxymethyl cellulose | 1-6 |
| Lactose balance to | 100 |

In a liquid composition, principally an aqueous solution of the three components mentioned is used, optionally in combination with conventional additives for improving stability, taste and storage life. Examples of such additives are fructose, citric acid, and sorbic acid.

Preferred compositions for aqueous solutions are, in percent by weight:

| | |
|---|---|
| Aspartame | 5-15 |
| Acesulfame-K | 1-6 |
| Thaumatin | 0.005-0.05 |
| Fructose | 0.1-0.3 |
| Citric acid | 0.01-0.1 |
| Sorbic acid | 0.01-0.1 |
| Water to | 100 |

When the sweetener has a crystalline form, it further contains a carrier. Investigations on various basic substances or carriers for the preparation of sweeteners with such properties have shown oligofructoses to be a good starting material. The advantage is that this substance is virtually neutral in taste, so that it does not give the sweetener any off-taste. Especially inulin is an oligofructose that meets this criterion particularly well.

Preferably, a sweetener in crystalline form according to the invention has the following composition:

| | |
|---|---|
| Aspartame | 0.5-1.5 |
| Acesulfame-K | 0.15-0.8 |
| Thaumatin | 0.0008-0.002 |
| Carrier to | 100. |

As mentioned, the carrier is preferably an oligofructose, inulin being particularly preferred. The preparation of the sweetener in crystalline form, also called bulk sweetener, can be carried out in a known manner. A suitable manner is described inter alia in Dutch patent application 10.11110.

Most preferred for a composition of a tablet according to the invention is a composition based on aspartame, acesulfame-K, thaumatin, lactose as filler and carboxymethyl cellulose as disintegrator.

The tablets according to the invention preferably have a weight in the range of from 45 to 75 mg per tablet. In combination with the contents of sweeteners in their relative ratios, such a tablet weight gives an ideal dosage of the sweeteners.

The invention will now be elucidated in and by the following examples.

### EXAMPLES

On the basis of three formulations, a tablet, a liquid sweetener, and a crystalline sweetener were manufactured. All amounts are expressed in percent by weight.

| Formulation 1 (tablet 52 mg) | |
|---|---|
| Aspartame | 19.5 |
| Acesulfame-K | 7.5 |
| Thaumatin | 0.04 |
| Maltodextrin | 0.36 |
| Leucine | 5.5 |
| Lactose | 63.6 |
| Carboxymethyl cellulose | 3.5 |

| Formulation 2 (liquid sweetener) | |
|---|---|
| Aspartame | 8.5 |
| Acesulfame-K | 3.3 |
| Thaumatin | 0.018 |
| Mattodextrin | 0.16 |
| Fructose | 0.19 |
| Citric acid | 0.048 |
| Sorbic acid | 0.048 |
| Water to | 100 |

| Formulation 3 (crystalline sweetener) | |
|---|---|
| Aspartame | 0.71 |
| Acesulfame-K | 0.27 |
| Thaumatin | 0.0015 |
| Maltodextrin | 0.0135 |
| Inulin to | 100 |

Upon use of these sweeteners in coffee or tea, a clear improvement of the taste in comparison with compositions without thaumatin was observed.

## Claims

1. A sweetener composition based on a combination of aspartame, acesulfame-K and thaumatin, comprising:
5 - 35 parts by weight of aspartame,
3 - 20 parts by weight of acesulfame-K, and
0.001 - 0.3 parts by weight of thaumatin.

2. A sweetener composition according to claim 1, wherein the weight ratio of aspartame to acesulfame-K is between 1 and 5.

3. A sweetener according to claim 1 or 2, in the form of a tablet, an aqueous solution or in crystalline form.

4. A sweetener according to claim 3, in the form of a tablet, while further a filler is present selected from the group consisting of lactose, derivatives of lactose, inulin, isomalt, oligofructose and combinations thereof.

5. A sweetener tablet according to claim 4, wherein as filler, lactose or an isomer thereof is used.

6. A sweetener tablet according to claim 4, with the following composition in percent by weieht:
| | |
|---|---|
| Aspartame | 10-30 |
| Acesulfame-K | 5-12 |
| Thaumatin | 0.1-0.001 |
| Leucine | 3-10 |
| Carboxymethyl cellulose | 1-6 |
| Lactose balance to | 100 |

7. A sweetener tablet according to claims 4-6, wherein the weight of the tablet is between 40 and 80 mg.

8. A sweetener according to claim 3 in the form of an aqueous solution having the following composition:
| | |
|---|---|
| Aspartame | 5-15 |
| Acesulfame-K | 1-6 |
| Thaumatin | 0.005-0.05 |
| Fructose | 0.1-0.3 |
| Citric acid | 0.01-0.1 |
| Sorbic acid | 0.01-0.1 |
| Water to | 100. |

9. A sweetener according to claim 3 in crystalline form having the following composition:
| | |
|---|---|
| Aspartame | 0.5-1.5 |
| Acesulfame-K | 0.15-0.8 |
| Thaumatin | 0.0008-0.002 |
| Oligofructose to | 100 |

## Patentansprüche

1. Süssstoff-Zusammensetzung basierend auf einer Kombination von Aspartam, Acesulfam-K und Thaumatin, umfassend:
5 - 35 Gew.-Teile Aspartam,
5 - 20 Gew.-Teile Acesulfam-K, und
0,001 - 0,3 Gew.-Teile Thaumatin.

2. Süssstoff-Zusammensetzung nach Anspruch 1, wobei das Gewichtsverhältnis von Aspartam zu Acesuslfam-K zwischen 1 und 5 liegt.

3. Süssstoff nach Anspruch 1 oder 2, in Form einer Tablette, einer wässrigen Lösung oder in kristalliner Form.

4. Süssstoff nach Anspruch 3, in Form einer Tablette, wobei darüber hinaus ein Füllstoff vorhanden ist, der ausgewählt wird aus der aus Lactose, Derivaten von Lactose, Inulin, Isomalt, Oligofructose und Kombinationen davon bestehenden Gruppe.

5. Süssstoff-Tablette nach Anspruch 4, wobei als Füllstoff Lactose oder ein Isomer. davon verwendet wird.

6. Süssstoff-Tablette nach Anspruch 4, mit der folgenden Zusammensetzung in Gewichtsprozent:
| | |
|---|---|
| Aspartam | 10 - 30 |
| Acesulfam-K | 5 - 12 |
| Thaumatin | 0,1 - 0,001 |
| Leucin | 3 - 10 |
| Carboxymethytcellulose | 1 - 6 |
| Lactose bis auf | 100. |

7. Süssstoff-Tablette nach den Ansprüchen 4 - 6, wobei das Gewicht der Tablette zwischen 40 und 80 mg liegt.

8. Süssstoff nach Anspruch 3 in Form einer wässrigen Lösung mit der folgenden Zusammensetzung:
| | |
|---|---|
| Aspartam | 5 - 15 |
| Acesulfam-K | 1 - 6 |
| Thaumatin | 0,005 - 0,05 |
| Fructose | 0,1 - 0,3 |
| Zitronensäure | 0,01 - 0,1 |
| Sorbinsäure | 0,01 - 0,1 |
| Wasser bis auf | 100. |

9. Süssstoff nach Anspruch 3 in kristalliner Form mit der folgenden Zusammensetzung:
| | |
|---|---|
| Aspartam | 0,5-1,5 |
| Acesulfam-K | 0,15 - 0,8 |
| Thaumatin | 0,0008 - 0,002 |
| Oligofructose bis auf | 100. |

## Revendications

1. Composition d'un adoucissant basée sur une combinaison d'aspartame, d'acésulfame-K et de thaumatine, comprenant:
de 5 à 35 parties en poids d'aspartame,
de 3 à 20 parties en poids d'acésulfame-K, et
de 0,001 à 0,3 parties en poids de thaumatine.

2. Composition d'un adoucissant selon la revendication 1, dans laquelle le rapport en poids de l'aspartame à l'acésulfame-K est compris dans la plage allant de 1 à 5.

3. Adoucissant selon la revendication 1 ou 2, sous la forme d'une pastille, d'une solution aqueuse ou sous une forme cristalline.

4. Adoucissant selon la revendication 3, sous la forme d'une pastille, comprenant en outre une charge choisie dans le groupe constitué du lactose, des dérivés du lactose, de l'inuline, de l'isomalt, de l'oligofructose et de combinaisons de ceux-ci.

5. Pastille d'adoucissant selon la revendication 4, dans laquelle on utilise comme charge du lactose ou un isomère de celui-ci.

6. Pastille d'adoucissant selon la revendication 4,, ayant la composition suivante en pourcentage en poids :
| | |
|---|---|
| Aspartame | 10 à 30 |
| Acésulfame-K | 5 à 12 |
| Thaumatine | 0,1 à 0,001 |
| Leucine | 3 à 10 |
| Carboxyméthylcellulose | 1 à 6 |
| Lactose pour obtenir | 100 |

7. Pastille d'adoucissant selon l'une quelconque des revendications 4 à 6, dans laquelle le poids de la pastille est compris dans la plage allant de 40 à 80 mg.

8. Adoucissant selon la revendication 3, sous la forme d'une solution aqueuse ayant la composition suivante :
| | |
|---|---|
| Aspartame | 5 à 15 |
| Acésulfame-K | 1 à 6 |
| Thaumatine | 0,005 à 0,05 |
| Fructose | 0,1 à 0,3 |
| Acide citrique | 0,01 à 0,1 |
| Acide sorbique | 0,01 à 0,1 |
| Eau jusqu'à | 100. |

9. Adoucissant selon la revendication 3, sous une forme cristalline ayant la composition suivante :
| | |
|---|---|
| Aspartame | 0,5 à 1,5 |
| Acésulfame-K | 0,15 à 0,8 |
| Thaumatine | 0,0008 à 0,002 |
| Oligofructose jusqu'à | 100 |
